# EUROPÄISCHE PATENTSCHRIFT

(11) **EP 1 162 053 B1**
(45) Veröffentlichungstag und Bekanntmachung des Hinweises auf die Patenterteilung: **24.03.2004**
(21) Anmeldenummer: 01112673.7
(22) Anmeldetag: 25.05.2001
(51) Int. Cl.: B29C 45/50

(54) **Einspritzaggregat für eine Spritzgiessmaschine**
Injection unit for an injection moulding machine
Unité d'injection pour machine à mouler par injection

(30) Priorität: 07.06.2000 DE 10028066
(43) Veröffentlichungstag der Anmeldung: 12.12.2001
(73) Patentinhaber: Krauss-Maffei Kunststofftechnik GmbH, 80997 München (DE)
(72) Erfinder: Decker, Robert, 81247 München (DE); Wohlrab, Walter, 91781 Weissenburg (DE); Zelleröhr, Michael, 80999 München (DE)
(74) Vertreter: Zollner, Richard

(56) Entgegenhaltungen:
- EP-A- 0 965 431
- US-A- 5 540 495
- US-A- 5 645 868
- PATENT ABSTRACTS OF JAPAN vol. 011, no. 125 (M-582), 18. April 1987 (1987-04-18) -& JP 61 266218 A (SUMITOMO HEAVY IND LTD), 25. November 1986 (1986-11-25)
- PATENT ABSTRACTS OF JAPAN vol. 016, no. 057 (M-1210), 13. Februar 1992 (1992-02-13) -& JP 03 256713 A (TOSHIBA MACH CO LTD), 15. November 1991 (1991-11-15)

## Beschreibung

Die Erfindung bezieht sich auf ein Einspritzaggregat für eine Spritzgießmaschine von der im Oberbegriff des Patentanspruchs 1 angegebenen Art.

Ein Einspritzaggregat ist aus der DE 43 44 335 C2 bekannt. Bei diesem bekannten Aggregat sind zwei Hohlwellenmotoren vorgesehen. Zum Drehen der Schnecke (Plastifizieren) dient ein Dosiermotor, welcher in Eingriff mit einer Verzahnung der Antriebswelle der Schnecke steht. Um eine Axialverschiebung der Antriebswelle, die am Einspritzmotor als Spindel ausgebildet und mit einer Spindelmutter in Verbindung steht, zu verhindern, muss der Einspritzmotor mit der gleichen Drehzahl wie der Dosiermotor laufen. Der verfahrensspezifisch erforderliche Staudruck wird über eine einstellbare Drehmomentgrenze am Einspritzmotor bewirkt. Sobald die Drehmomentgrenze erreicht ist, stellt sich zwischen dem Dosiermotor und dem Einspritzmotor eine Drehzahldifferenz ein, und der axiale Rücklauf der Schnecke stellt sich durch gezieltes Gegenhalten ein. Zum Einspritzen hält der Dosiermotor die Antriebswelle drehfest, und der Einspritzmotor leitet die axiale Verschiebung der Schnecke über die Spindelmutter ein. Nachteilig erweist sich hierbei, dass das eingeleitete Drehmoment des Einspritzmotors zum Einspritzen vom Dosiermotor in Gegenrichtung bei Drehzahl 0 gehalten werden muss. Dieses hat Nachteile hinsichtlich der thermischen Auslastung dieses Motors. Jede Betriebsart des Einspritzaggregats erfordert den Betrieb und das Einschalten beider Motoren, mit einem dadurch bedingten hohen Energieverbrauch der Maschine. Obwohl beim Einspritzen beide Motoren eingeschaltet sind, wird nur die Leistung des Einspritzmotors an der Schnecke wirksam.

Ein Einspritzaggregat mit konstruktiv anderem Aufbau und koppelbaren Motoren ist aus der DE 35 05 880 C2 bekannt. Die DE 198 31 482 C1 zeigt ein Einspritzaggregat gemäß dem Oberbegriff des Patentanspruchs 1.

Ein Einspritzaggregat der eingangs genannten Art ist in der JP 61 266 218 beschrieben. Hierbei beaufschlagt ein erster Elektromotor über ein Spindelgetriebe eine Antriebswelle einer Plastifizierschnecke in deren Axialrichtung. Überdies ist ein zweiter Elektromotor vorgesehen, mit dem der rotatorische Antrieb realisiert wird. Beide Motoren sind als Hohlwellenmotore ausgeführt. Mit dieser Vorrichtung kann das Trägheitsmoment des Systems reduziert und eine Überlastung vermieden werden. Dabei sind auf dem Antriebswelle für die Plastifizierspindel ein Keilnutenschaft und eine Kugelspindelbahn integriert ausgebildet.

Eine effizienzerhöhende und kostensparende Einspritzvorrichtung ist in der JP 03 256 713 vorgestellt. Demgemäß sind zwei Elektromotore wirkmäßig in Reihe hintereinander geschalten und über drei Kupplungsvorrichtungen mit einem Spindelantrieb, einer Antriebswelle der Plastifizierschnecke und untereinander koppelbar. Beim Einspritzhub werden beide Elektromotore auf einem Schlitten in Axialrichtung der Plastifizierschnecke verschoben.

Der Erfindung liegt die Aufgabe zugrunde, ein Einspritzaggregat der Eingangs genannten Art so weiter zu entwickeln, dass bei gleicher Motorleistung die Einspritzleistung erhöht werden kann oder bei gleicher Einspritzleistung die Auslegung der Motoren reduziert werden kann.

Die Lösung dieser Aufgabe erfolgt durch ein Einspritzaggregat mit den in Patenanspruch 1 angegebenen Merkmalen; die weiteren Patentansprüche betreffen vorteilhafte Weiterentwicklungen der Erfindung.

Erfindungsgemäß ist zwischen den Wellen der beiden Motoren eine lösbare Kupplungsvorrichtung vorgesehen, und die Welle des ersten Motors ist mit der Antriebswelle für die Schnecke über eine lösbare Kupplungsvorrichtung verbunden. Auf diese Weise können die Motoren zum Drehen und zum Verschieben der Schnecke unabhängig voneinander betrieben werden, indem die erste Kupplungsvorrichtung gelöst wird und die zweite Kupplungsvorrichtung geschlossen wird. Für das Einspritzen können beide Motoren miteinander gekoppelt werden, wobei die zweite Kupplungsvorrichtung gelöst wird, so dass die Leistung beider Motoren für den Einspritzvorgang zur Verfügung steht.

Dabei ist die Antriebwelle der Schnecke in einer lösbaren Bremse geführt, die eine translatorische Bewegung der Antriebswelle zulässt, eine rotatorische Drehung aber bei Bedarf verhindert. Durch die Bremse wird für den Einspritzvorgang eine Drehmomentenabstützung zur Verfügung gestellt.

Bevorzugte Ausführungsbeispiele der Erfindung werden anhand der beifügten Zeichnungen erläutert:
- Fig. 1: zeigt einen schematischen Längsschnitt durch den An triebsteil eines Einspritzaggregates einer Spritzgießmaschine gemäß einem ersten Ausführungsbeispiel, und
- Fig. 2: eine der Darstellung der Figur 1 entsprechende Darstellung eines zweiten Ausführungsbeispiels.

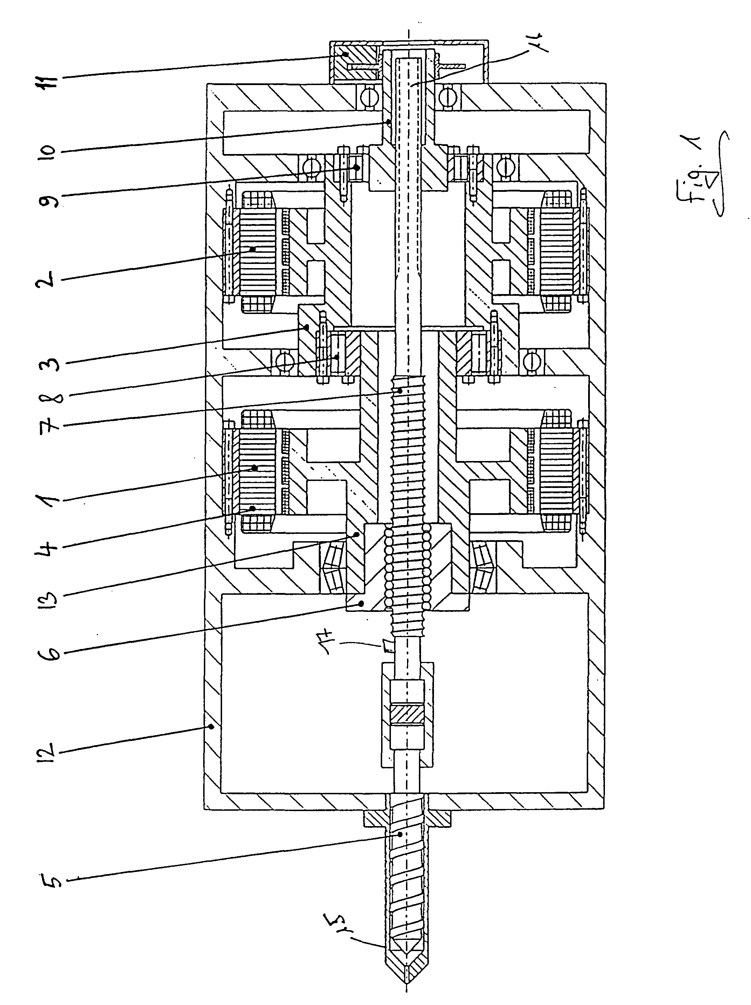

Figur 1 zeigt die rückwärtigen Teilstücke des Schneckenzylinders 15 und der darin gelagerten Schnecke 5 einer ansonsten nicht näher dargestellten Spritzgießmaschine. Der Schneckenzylinder 5 ist an einem Gehäuse 12 angeordnet, an dem ein erster Motor 1 (Einspritzmotor) und ein zweiter Motor 2 (Dosiermotor), die als Hohlwellenmotoren ausgebildet sind, befestigt sind. Die Schnecke 5 ist mit einer Antriebswelle 7 fest verbunden, die einerseits ein Spindelgewinde für den Translationsantrieb, andererseits einen Antriebszapfen 16 für den Rotationsantrieb aufweist. Eine Spindelmutter 6 ist mit der Hohlwelle (Antriebswelle) 13 des ersten Hohlwellenmotors 1 verbunden.

Der Antriebszapfen 16 der Antriebswelle 7 ist mit Axialnuten versehen und erstreckt sich in ein Hohlwellenelement 10, das ebenfalls Axialnuten aufweist. Das Hohlwellenelement 10 ist über eine lösbare Kupplungsvorrichtung 9 mit der Hohlwelle (Antriebswelle) 3 des zweiten Motors verbunden.

Zwischen den Hohlwellen 13 und 3 des ersten bzw. des zweiten Motors ist eine lösbare Kupplungsvorrichtung 8 vorgesehen, und die Hohlwellen 13, 3 und das Hohlwellenelement 10 sind am Gehäuse drehbar gelagert.

Das Hohlwellenelement 10 erstreckt sich bis in eine außerhalb des Gehäuses 12 vorgesehene Bremse 11. Die Bremse verhindert bei Bedarf eine Drehung des Antriebszapfens 16, wobei aber eine translatorische Bewegung des Antriebszapfen 16 in dem Hohlwellenelement 10 zugelassen wird.

Durch Zusammenschalten des Einspritzmotors 1 und des Dosiermotors 2 beim Einspritzen können die Nachteile des Eingangs beschriebenen Standes der Technik behoben werden. Insbesondere kann entweder die Einspritzleistung erhöht werden, oder bei gleicher erforderlicher Einspritzleistung können der Einspritzmotor und der dazugehörige Umrichter kleiner dimensioniert werden. Dementsprechend sinken bei gleichen Leistungsdaten die Kosten und der Energieverbrauch des Einspritzaggregats.

Erfindungsgemäß werden die oben beschriebenen Merkmale dadurch realisiert, dass beim Einspritzen die Kupplungsvorichtungen zwischen der Antriebswelle 3 des Dosiermotors 2 und der Antriebswelle 7 der Spindel gelöst wird und gleichzeitig die Hohlwelle 3 des Dosiermotors 2 und die Hohlwelle 13 des Einspritzmotors 1 gekoppelt werden.

Vorteilhafterweise ist der Dosiermotor links- und rechtsstehend ausgeführt, wobei die Kupplungsvorrichtung 8 beim Einspritzen zwischen der Hohlwelle 3 und der Hohlwelle 13 entweder schaltbar oder in Drehrichtung des Dosiermotors 2 selbstständig sperrend ausgeführt ist.

Dabei erfolgt eine drehfeste Verbindung der Motoren 1 und 2, und die Drehmomente beider Motoren können in die Spindelmutter 6 eingeleitet werden, welche die axiale Verschiebung der Schnecke 5 bewirkt, gleichzeitig erforderlich ist das Lösen der Verbindung zwischen der Hohlwelle 3 des Dosiermotors und dem Hohlwellenelement 10 über die in der entsprechenden Drehrichtung öffnende Kupplungsvorrichtung 9; die Kupplungsvorrichtung 9 kann auch schaltbar ausgelegt sein.

Die Drehmomentabstützung erfolgt durch das rotatorische Festhalten der Welle 7 bzw. des Antriebszapfens 16 über die Bremse 11 am Gehäuse 12 des Aggregats.

Der Vorgang des Plastifizierens erfolgt umgekehrt durch Lösen der Bremse 11, Sperren der Kupplungsvorrichtung 9 und Lösen des Kupplungsvorrichtung 8.

Der verfahrensspezifische Staudruck wird wie oben beschrieben durch die einzustellende Drehmomentgrenze des Einspritzmotors geregelt. Das aktive Zurückziehen der Schnecke im Wartungsfall erfolgt durch Lösen der Bremse 11 und Drehen des Einspritzmotors 1 in Gegenrichtung.

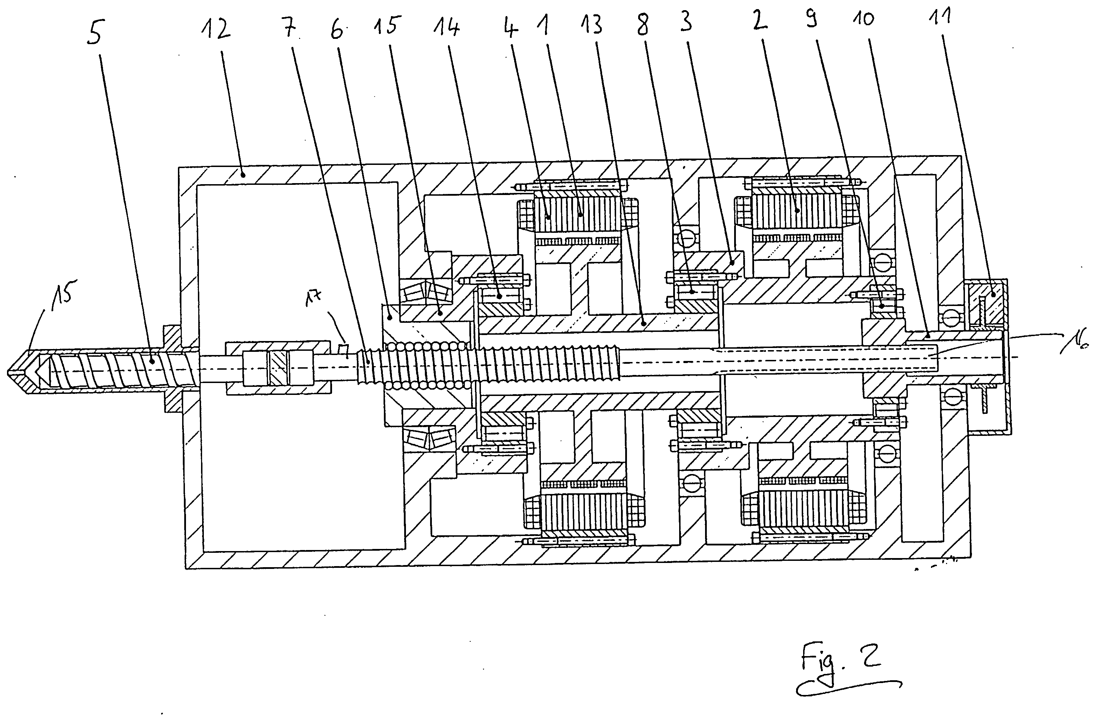

Figur 2 ist eine erweiterte Ausführung des Lösungsprinzips. Zwischen der Hohlwelle 13 des Einspritzmotors und der Spindelmutter 6 ist eine Kupplungsvorrichtung 14 vorgesehen, und durch gezieltes Lösen oder Festhalten der Verbindung über die Kupplungsvorrichtung 14 wird ein völlig unabhängiges Betreiben der beiden Motoren ermöglicht. Alle vorgenannten Vorteile des ersten Ausführungsbeispiels sind auch bei dieser Lösung vorhanden. Die Funktion ist die gleiche wie im Ausführungsbeispiel der Figur 1, mit dem Unterschied, dass zum Plastifizieren und zum Einstellen des Staudrucks der Einspritzmotor 1 mit dem Dosiermotor 2 nicht mitdrehen muss, da die Spindelmutter 6 mit der Spindel leer mitdrehen kann. Grundsätzlich ist bei diesem Ausführungsbeispiel auch der gemeinsame Einsatz beider Motoren für das Plastifizieren möglich.

Bei beiden Ausführungsformen ist schematisch an der Antriebswelle 7 für die Schnecke 5 ein Dehnungssensor 17 vorgesehen. Dieser Sensor erfasst eine Dehnung bzw. Stauchung des Materials der Antriebswelle 7 und erlaubt, nach einer entsprechenden Kalibrierung, einen Rückschluss auf den Einspritzdruck in der Schnecke 5. Vorzugsweise ist der Sensor 17 über eine nicht dargestellte elektrische Verbindung mit einer Steuervorrichtung (nicht dargestellt) verbunden, so dass über den Sensor 17, die Steuervorrichtung und die beiden Motoren der Einspritzdruck in der Schnecke genau geregelt werden kann.

Vorzugsweise ist der Sensor 17 in Form eines Dehnungsmessstreifens ausgebildet, und der Sensor 17 kann vor der Verbindung zwischen der Antriebswelle 7 und der Schnecke 5, in dieser Verbindung oder hinter der Verbindung zwischen der Schnecke 5 und der Welle 7 angeordnet sein.

## Patentansprüche

1. Einspritzaggregat für eine Spritzgießmaschine zur Verarbeitung von thermoplastischem Material mit im wesentlichen einem Schneckenzylinder (15), einer Schnecke (5) und einem aus zwei Elektromotoren (1, 2) bestehenden Schneckenantrieb, von denen ein erster Motor (1) zur Durchführung der Axialbewegung der Schnecke (5) vorgesehen ist und ein zweiter Motor (2) zur Durchführung der Drehbewegung der Schnecke (5) vorgesehen ist, wobei beide Elektromotoren mit ihren Achsen fluchtend zur Achse der Schnecke (5) angeordnet sind und mindestens ein Elektromotor ein Hohlwellenmotor ist,
**dadurch gekennzeichnet,**
**dass** die Antriebswelle (2) des zweiten Motors über eine lösbare Kupplungsvorrichtung (9, 10) mit der Antriebswelle (7, 16) der Schnecke (5) verbunden ist, zwischen der Antriebswelle (13) des ersten Motors und der Antriebswelle (3) des zweiten Motors (2) eine lösbare Kupplungsvorrichtung (8) angeordnet ist und dass eine Bremse vorgesehen ist, die bei Bedarf eine rotatorische Drehung der Antriebswelle (7, 16) der Schnecke (5) verhindert.

2. Einspritzaggregat nach Anspruch 1,
**dadurch gekennzeichnet,**
**dass** zwischen der Antriebswelle (13) des ersten Motors (1) und der Antriebswelle (7) der Schnecke (5) eine lösbare Kupplungsvorrichtung (14, 15) vorgesehen ist.

3. Einspritzaggregat nach Anspruch 1 oder 2,
**dadurch gekennzeichnet,**
**dass** der zweite Motor (2) ein Hohlwellenmotor ist und über ein Hohlwellenelement (10) mit einem Antriebszapfen (16) der Antriebswelle (7) der Schnecke (5) verbunden ist, wobei die lösbare Kupplungsvorrichtung (9) zwischen der Antriebswelle (3) des zweiten Motors (2) und dem Hohlwellenelement (10) angeordnet ist.

4. Einspritzaggregat nach einem der vorstehenden Ansprüche,
**dadurch gekennzeichnet,**
**dass** die lösbare Kupplungsvorrichtung (8) zwischen dem ersten (1) und dem zweiten (2) Motor schaltbar ist oder in einer Drehrichtung des zweiten Motors selbstständig sperrend ist.

5. Einspritzaggregat nach einem der vorstehenden Ansprüche,
**dadurch gekennzeichnet,**
**dass** die Kupplungsvorrichtung (9) zwischen der Antriebswelle (3) des zweiten Motors (2) und einem Antriebszapfen (16) der Antriebswelle (7) für die Schnecke (5) schaltbar ist oder als in einer Drehrichtung öffnendes Sperrelement gebildet ist.

6. Einspritzaggregat nach Anspruch 2,
**dadurch gekennzeichnet,**
**dass** die Kupplungsvorrichtung (14) zwischen der Antriebswelle (13) des ersten Motors und einer Spindelmutter (6) schaltbar ist oder als in einer Drehrichtung sperrendes Element ausgebildet ist.

7. Einspritzaggregat nach einem der vorstehenden Ansprüche,
**dadurch gekennzeichnet,**
**dass** im Antriebsstrang für die Schnecke (5) ein Sensor (17) vorgesehen ist, der einen Rückschluss auf den Einspritzdruck der Schnecke (5) zulässt.

8. Einspritzaggregat nach Anspruch 7,
**dadurch gekennzeichnet,**
**dass** der Sensor (17) als Dehnungsmesselement oder Dehnungsmessstreifen ausgebildet ist.

9. Einspritzaggregat nach einem der vorstehenden Ansprüche,
**dadurch gekennzeichnet,**
**dass** die lösbare Kupplungseinheit (9, 10) derart ausgebildet ist, dass der zweite Motor (2) beim Einspritzvorgang keine Drehbewegung auf die Antriebswelle (7) überträgt.

10. Einspritzaggregat nach einem der vorstehenden Ansprüche,
**dadurch gekennzeichnet,**
**dass** die beiden Kupplungseinheiten (8, 9 und 10)derart ausgebildet sind, dass die beiden Motoren (1,2) beim Plastifiziervorgang voneinander entkoppelt sind und der zweite Motor (2) eine Drehbewegung auf die Schnecke (5) überträgt.

## Claims

1. An injection unit for an injection-moulding machine for the processing of thermoplastic material having essentially a screw cylinder (15), a screw (5) and a screw drive consisting of two electric motors (1, 2), of which a first motor (1) is provided to perform the axial movement of the screw (5) and a second motor (2) is provided to perform the rotational movement of the screw (5), wherein both electric motors are disposed with their axes aligning with the axis of the screw (5) and at least one electric motor is a quill motor,
**characterised in that** the drive shaft (2) of the second motor is connected via a releasable coupling device (9, 10) to the drive shaft (7, 16) of the screw (5), a releasable coupling device (8) being disposed between the drive shaft (13) of the first motor and the drive shaft (3) of the second motor (2)
and **in that** a brake is provided, which if necessary prevents a rotator-type rotation of the drive shaft (7, 16) of the screw (5).

2. An injection unit according to claim 1,
**characterised in that** a releasable coupling device (14, 15) is provided between the drive shaft (13) of the first motor (1) and the drive shaft (7) of the screw (5).

3. An injection unit according to Claim 1 or 2,
**characterised in that** the second motor (2) is a quill motor and is connected via a quill element (10) to a drive pin (16) of the drive shaft (7) of the screw (5), the releasable coupling device (9) being disposed between the drive shaft (3) of the second motor (2) and the quill element (10).

4. An injection unit according to one of the preceding Claims,
**characterised in that** the releasable coupling device (8) can be connected between the first (1) and the second (2) motor or is automatically inhibiting in one direction of rotation of the second motor.

5. An injection unit according to one of the preceding Claims,
**characterised in that** the coupling device (9) can be connected between the drive shaft (3) of the second motor (2) and a drive pin (16) of the drive shaft (7) for the screw (5) or is formed as a locking element that opens in one direction of rotation.

6. An injection unit according to Claim 2,
**characterised in that** the coupling device (14) can be connected between the drive shaft (13) of the first motor and a spindle nut (6) or is constructed as an element that inhibits in one direction of rotation.

7. An injection unit according to one of the preceding Claims,
**characterised in that** a sensor (17) which permits an inference concerning the injection pressure of the screw (5) is provided in the drive train for the screw (5).

8. An injection unit according to Claim 7,
**characterised in that** the sensor (17) is constructed as an extensometer or strain gauge.

9. An injection unit according to one of the preceding Claims,
**characterised in that** the releasable coupling unit (9, 10) is constructed in such a manner that the second motor (2) does not transmit any rotational movement to the drive shaft (7) during the injection operation.

10. An injection unit according to one of the preceding Claims,
**characterised in that** the two coupling units (8, 9 and 10) are constructed in such a manner that the two motors (1, 2) are decoupled from each other during the plasticising operation and the second motor (2) transmits a rotational movement to the screw (5).

## Revendications

1. Dispositif d'injection pour une presse d'injection, destiné au traitement d'une matière thermoplastique, comprenant sensiblement un cylindre à vis sans fin (15), une vis sans fin (5) et un entraînement pour la vis sans fin formé par deux moteurs électriques (1, 2), parmi lesquels un premier moteur (1) est prévu pour la mise en oeuvre du mouvement axial de la vis sans fin (5) et un deuxième moteur (2) est prévu pour la mise en oeuvre du mouvement de rotation de la vis sans fin (5), les deux moteurs électriques étant agencés en alignement avec leurs axes par rapport à l'axe de la vis sans fin (5) et au moins un moteur électrique étant un moteur à arbre creux, **caractérisé en ce que** l'arbre d'entraînement (2) du deuxième moteur est relié par un dispositif de couplage (9, 10) amovible avec l'arbre d'entraînement (7, 16) de la vis sans fin (5), un dispositif de couplage (8) amovible est agencé entre l'arbre d'entraînement (13) du premier moteur et l'arbre d'entraînement (3) du deuxième moteur (2), et **en ce qu'**il est prévu un frein qui, en cas de besoin, empêche un mouvement rotatoire de l'arbre d'entraînement (7, 16) de la vis sans fin (5).

2. Dispositif d'injection selon la revendication 1, **caractérisé en ce qu'**un dispositif de couplage (14, 15) amovible est prévu entre l'arbre d'entraînement (13) du premier moteur (1) et l'arbre d'entraînement (7) de la vis sans fin (5).

3. Dispositif d'injection selon la revendication 1 ou 2, **caractérisé en ce que** le deuxième moteur (2) est un moteur à arbre creux et est relié, par l'intermédiaire d'un élément d'arbre creux (10), à un tourillon de transmission (16) de l'arbre d'entraînement (7) pour la vis sans fin (5), le dispositif de couplage (9) amovible étant agencé entre l'arbre d'entraînement (3) du deuxième moteur (2) et l'élément d'arbre creux (10).

4. Dispositif d'injection selon l'une quelconque des revendications précédentes, **caractérisé en ce que** le dispositif de couplage (8) amovible entre le premier (1) et le deuxième (2) moteur est embrayable ou se bloque automatiquement dans un sens de rotation du deuxième moteur.

5. Dispositif d'injection selon l'une quelconque des revendications précédentes, **caractérisé en ce que** le dispositif de couplage (9) entre l'arbre d'entraînement (3) du deuxième moteur (2) et un tourillon de transmission (16) de l'arbre d'entraînement (7) pour la vis sans fin (5) est embrayable ou peut être conçu sous forme d'élément de blocage se débloquant dans un sens de rotation.

6. Dispositif d'injection selon la revendication 2, **caractérisé en ce que** le dispositif de couplage (14) entre l'arbre d'entraînement (13) du premier moteur et un écrou de broche (6) est embrayable ou est conçu sous forme d'élément qui bloque dans un sens de rotation.

7. Dispositif d'injection selon l'une quelconque des revendications précédentes, **caractérisé en ce que**, dans la ligne d'entraînement de la vis sans fin (5), il est prévu un capteur (17) qui autorise un retour à la pression d'injection de la vis sans fin (5).

8. Dispositif d'injection selon la revendication 7, **caractérisé en ce que** le capteur (17) est conçu sous forme de dilatomètre ou d'extensomètre.

9. Dispositif d'injection selon l'une quelconque des revendications précédentes, **caractérisé en ce que** le dispositif de couplage (9, 10) amovible est conçu de telle sorte que le deuxième moteur (2) ne transmet pas de mouvement de rotation sur l'arbre d'entraînement (7) pendant le processus d'injection.

10. Dispositif d'injection selon l'une quelconque des revendications précédentes, **caractérisé en ce que** les deux dispositifs de couplage (8, 9 et 10) sont conçus de telle sorte que les deux moteurs (1, 2) dont découplés l'un de l'autre pendant le processus de plastification et le deuxième moteur (2) transmet un mouvement de rotation sur la vis sans fin (5).
